# EUROPÄISCHE PATENTANMELDUNG

(11) **EP 3 318 782 A1**
(43) Veröffentlichungstag der Anmeldung: **09.05.2018**
(21) Anmeldenummer: 17199580.6
(22) Anmeldetag: 01.11.2017
(51) Int. Cl.: F16J 3/02, F16J 3/06, F15B 15/10

(54) **STELLVORRICHTUNG**

(30) Priorität: 03.11.2016 LU 93288
(71) Anmelder: Hofmann-Reinecke, Hans, 7130 Somerset West (ZA)
(72) Erfinder: Hofmann-Reinecke, Hans, 7130 Somerset West (ZA)
(74) Vertreter: Grabovac, Dalibor

(57) **Zusammenfassung**

Die Erfindung betrifft eine Stellvorrichtung mit zwei Ankoppelelementen, deren Abstand mittels eines Stellantriebs veränderbar ist. Die Stellvorrichtung zeichnet sich dadurch aus, dass der Stellantrieb eine erste und eine zweite Kammer aufweist, deren Füllvolumen veränderbar ist und die beide, insbesondere ausschließlich, mit einem strömungsfähigen Medium gefüllt sind und die beide an einem gemeinsamen Zwischenelement angeordnet sind, das eine Pumpvorrichtung aufweist, mittels der das Medium von der ersten Kammer in die zweite Kammer und/oder von der zweiten Kammer in die erste Kammer gepumpt werden kann, wobei jede der Kammern ein flexibles Hüllenteil und eines der Ankoppelelemente aufweist und wobei jeweils ein Annähern des Ankoppelelements zu dem Zwischenelement und die damit einher gehende Längenänderung der jeweiligen Kammer durch eine Änderung des Innenvolumens der jeweiligen Kammer bewirkbar ist, wobei das Verhältnis von Längenänderung zu Innenvolumenänderung bei den beiden Kammern unterschiedlich ist.

## Beschreibung

Die Erfindung betrifft eine Stellvorrichtung mit zwei Ankoppelelementen, deren Abstand mittels eines Stellantriebs veränderbar ist.

Die Erfindung betrifft außerdem ein Fluggerät, insbesondere Flugzeug, mit einer solchen Stellvorrichtung.

Stellvorrichtungen sind in unterschiedlichen Ausführungen bekannt. Besonders verbreitet sind Stellvorrichtungen, die als Antriebsmittel eine Stellspindel oder einen hydraulischen Zylinder aufweisen, um die Relativposition zweier Ankoppelelemente einzustellen. An den Ankoppelelementen können externe Gegenstände, insbesondere Bauteile, befestigt werden, deren Relativposition zueinander mit der Stellvorrichtung verändert werden kann. Die Ankoppelelemente sind zumeist mittels Linearführungen, die Gleit- oder Wälzlager beinhalten, relativ zueinander verschiebbar gelagert. Derartige Stellvorrichtungen weisen nachteiliger Weise eine Vielzahl von Komponenten auf, die sich gleitend oder reibend gegeneinander bewegen, was die Stellvorrichtung störungsanfällig macht.

Aus DE 10 2009 048 780 A1 ist eine Faltenbalganordnung bekannt, die mindestens einen Faltenbalg aufweist, der über einen eine Fluidkammer umschließenden gummielastischen Balgkörper verfügt. Der Balgkörper weist eine oder mehrere Ringfalten auf, die jeweils von zwei in einem radial außenliegenden Scheitelbereich miteinander verbundenen ringförmigen Faltenschenkeln gebildet ist. Der Balgkörper setzt sich aus mehreren axial aufeinanderfolgend angeordneten und fluiddicht miteinander verbundenen individuellen Balgkörperelementen zusammen, wobei jede Ringfalte von zwei jeweils einen der beiden zugehörigen ringförmigen Faltenschenkel definierenden Balgkörperelementen gebildet ist. Bei einer Verwendung als Aktor kann über einen Verbindungskörper eine Antriebskraft abgegriffen werden.

Aus DE 33 38 177 C2 ist ein Mehrstufen-Verstellorgan, bekannt, das zwei axial miteinander fluchtende Faltenbälge aufweist, die an ihren aneinander zugewandten Enden durch ein Verbindungsgliedteil miteinander verbunden und gesondert wahlweise je mit einer Unterdruckquelle oder mit der Außenatmosphäre verbindbar sind. Eines der beiden voneinander abgewandten Enden der beiden Faltenbälge ist mit einem bewegbaren Maschinenteil verbindbar, während das andere der beiden voneinander abgewandten Enden der Faltenbälge mit einem ortsfesten Maschinenteil verbindbar ist. Der eine der beiden Faltenbälge ist mittels eines weiteren Verbindungsgliedteils derart überbrückt, dass das Zusammenschieben des anderen Faltenbalgs auf das diesem abgewandte Ende des ersteren Faltenbalgs übertragen werden kann, ohne dass der erstere Faltenbalg dadurch ausgezogen bzw. gestreckt wird und dass trotzdem der erstere Faltenbalg durch Unterdruck zusammengeschoben werden kann, wenn der andere Faltenbalg durch Unterdruck bereits zusammengeschoben ist.

Aus FR 2 744 178 A1 ist eine Verstellvorrichtung für eine Fahrzeugheizungs- / Lüftungsklappe bekannt. Die Verstellvorrichtung weist ein Gehäuse auf, das mit einem inkompressiblen Hydrauliköl gefüllt ist. Eine Gehäusewand des Gehäuses wird von primären und sekundären Balgen gebildet. Jeder Balg ist an einem axialen Ende geschlossen und steht durch das andere Ende mit dem Rest des Gehäuses in Verbindung. Eine axiale Verschiebung um d1 des ersten Endes des primären Faltenbalgs entspricht einer axialen Verschiebung um d2 = a x d1 des ersten Endes des sekundären Faltenbalgs, wobei a ein konstanter Faktor ist.

Die aus dem Stand der Technik bekannten Stellvorrichtungen haben den Nachteil, dass sie nur begrenzte Anwendungsmöglichkeiten bieten und/oder sehr kompliziert und damit störungsanfällig aufgebaut sind.

Bei Flugzeugen werden zumeist hydraulisch angetriebene Stellvorrichtungen verwendet. Wegen der Wichtigkeit dieser Stellvorrichtungen für die Flugsicherheit haben Flugzeuge in aufwändiger Weise zumeist drei unabhängige hydraulische Systeme. Dennoch ist ein Versagen der Hydraulik eine der häufigsten Ursachen für Zwischenfälle, bei denen beispielsweise Landeklappen oder Fahrwerke nicht ausfahren. Besondere Schwachstelle sind hierbei die langen, gegen mechanische Beschädigungen empfindlichen Hydraulikleitungen.

Es ist die Aufgabe der vorliegenden Erfindung, eine Stellvorrichtung anzugeben, die für ganz unterschiedliche Anwendungen verwendbar ist und die besonders einfach und zuverlässig ausgebildet ist.

Die Aufgabe wird durch eine Stellvorrichtung gelöst, die dadurch gekennzeichnet ist, dass der Stellantrieb eine erste und eine zweite Kammer aufweist, deren Füllvolumen veränderbar ist und die beide, insbesondere vollständig, mit einem strömungsfähigen Medium gefüllt sind und die beide an einem gemeinsamen Zwischenelement angeordnet sind, das eine Pumpvorrichtung aufweist, mittels der das Medium von der ersten Kammer in die zweite Kammer und/oder von der zweiten Kammer in die erste Kammer gepumpt werden kann, wobei jede der Kammern ein flexibles Hüllenteil und eines der Ankoppelelemente aufweist und wobei jeweils ein Annähern des Ankoppelelements zu dem Zwischenelement und die damit einher gehende Längenänderung der jeweiligen Kammer durch eine Änderung des Innenvolumens der jeweiligen Kammer bewirkbar ist, wobei das Verhältnis von Längenänderung zu Innenvolumenänderung bei den beiden Kammern unterschiedlich ist.

Die erfindungsgemäße Stellvorrichtung hat den ganz besonderen Vorteil, dass sie (abgesehen von eigen Bauteilen der Pumpvorrichtung) ohne Teile, die sich gleitend oder reibend gegeneinander bewegen, auskommen kann, was weiter unten im Detail erläutert ist. Aus diesem Grund kann die erfindungsgemäße Stellvorrichtung besonders verschleißarm ausgebildet werden. Darüber hinaus ist der Wartungsbedarf bei der erfindungsgemäßen Stellvorrichtung äußerst gering.

Die Stellvorrichtung kann in einer vorteilhaften Ausgestaltung, was weiter unten ausführlich beschrieben ist, statt zwei Kammern auch drei oder mehr Kammern aufweisen. Die grundsätzliche Funktionsweise der erfindungsgemäßen Stellvorrichtung wird zum besseren Verständnis nachfolgend jedoch zunächst für eine Ausführung mit genau zwei Kammern beschrieben.

Die erste Kammer kann ein erstes rigides Hüllenteil aufweisen, das ein erstes der Ankoppelelemente ist. Alternativ oder zusätzlich kann auch vorgesehen sein, dass die zweite Kammer ein zweites rigides Hüllenteil aufweist, das ein zweites der Ankoppelelemente ist.

An den Ankoppelelementen können externe Bauteile befestigt werden, deren Relativposition mit der Stellvorrichtung verändert werden kann.

Bei einer vorteilhaften Ausführung ist vorgesehen, dass die Projektionen der dem Medium zugewandten Innenflächen der Ankoppelelemente, insbesondere der rigiden Hüllenteile, in Verschieberichtung der Ankoppelelemente unterschiedlich groß sind. Wenn bei einer solchen Ausführung der Stellvorrichtung die Ankoppelelemente voneinander entfernt werden sollen, was zur Folge hat, dass auf die rigiden Hüllenteile, die als Ankoppelelemente fungieren, entgegengesetzte und aufeinander zu gerichtete Kräfte wirken, so muss im Inneren der Kammer, die das rigide Hüllenteil mit der (in Projektion auf die Verschieberichtung des zugehörigen Ankoppelelements betrachtet) kleineren dem Medium zugewandten Innenfläche aufweist, ein höherer Druck herrschen, als im Inneren der anderen Kammer, die das rigide Hüllenteil mit der (in Projektion auf die Verschieberichtung des zugehörigen Ankoppelelements betrachtet) größeren dem Medium zugewandten Innenfläche aufweist. Ursache hierfür ist, dass der Betrag der auf jede der Kammern einwirkenden Kraft bei einem Verstellvorgang gleich ist, der jeweils wirkende Druck jedoch auf Grund der unterschiedlich großen Innenflächen (betrachtet in Projektion auf die Verschieberichtung des zugehörigen Ankoppelelemente) der rigiden Hüllenteile, an denen die Kräfte angreifen, unterschiedlich ist. Dieser Druckunterschied zum Antreiben der Verstellbewegung, bei der die Ankoppelelemente auseinander gedrückt werden, wird von der Pumpvorrichtung bewirkt. Wird die Pumpvorrichtung mit umgekehrter Pumprichtung betrieben, vollzieht sich der umgekehrte Prozess, so dass sich die Ankoppelelemente einander annähern.

Aufgrund der Tatsache, dass jeweils ein Annähern des rigiden Hüllenteils zu dem Zwischenelement und die damit einher gehende Längenänderung der jeweiligen Kammer durch eine Änderung des Innenvolumens der jeweiligen Kammer bewirkbar ist, wobei das Verhältnis von Längenänderung zu Innenvolumenänderung bei den beiden Kammern unterschiedlich ist, ist vorteilhaft erreicht, dass die Ankoppelelemente, die insbesondere rigide Hüllenteile sein können und die insbesondere die entgegengesetzt angeordnete Enden der Stellvorrichtung bilden können, sich einander annähern, wenn eine der Kammern, nämlich die Kammer, aus der das Medium mittels der Pumpvorrichtung heraus gepumpt wird, fortlaufend an Länge verliert, während die andere Kammer, in die das Medium einströmt, gleichzeitig, allerdings in einem geringeren Maße, an Länge gewinnt. Bei umgekehrter Pumprichtung gewinnt die Kammer, in die das Medium dann einströmt, schneller an Länge, als die Kammer, aus der das Medium ausströmt; so dass sich die Stellvorrichtung insgesamt längt und sich der Abstand der Ankoppelelemente vergrößert. Eine solche Ausführung kann vorteilhaft insbesondere unter Verwendung zweier, im Querschnitt senkrecht zur Axialrichtung unterschiedlich großer Faltenbalge realisiert werden, was weiter im Einzelnen genauer erläutert wird.

Die Pumpvorrichtung ist vorzugsweise elektrisch angetrieben und kann insbesondere einen elektrischen Antriebsmotor aufweisen. Insbesondere können Kabel vorhanden sein, über die die Pumpvorrichtung mit elektrischer Energie versorgt wird.

Bei einer besonderen Ausführung wird die Pumpvorrichtung kabellos gesteuert. Insbesondere bei einer solchen Ausführung kann die Stellvorrichtung einen Energiespeicher, insbesondere einen Akku, beinhalten, der die Pumpvorrichtung mit elektrischer Energie versorgt.

Bei einer ganz besonders vorteilhaften Ausführung ist wenigstens eines der flexiblen Hüllenteile als Faltenbalg mit wenigstens einer Ringfalte ausgebildet. Insbesondere kann vorteilhaft vorgesehen sein, dass wenigstens eines der flexiblen Hüllenteile als zylinderförmiger, insbesondere kreiszylinderförmiger, Faltenbalg mit wenigstens einer Ringfalte ausgebildet ist.

Besonders vorteilhaft ist eine Ausführung, bei der beide flexiblen Hüllenteile als, insbesondere koaxial zueinander angeordnete, Faltenbalge ausgebildet sind. Hierbei kann vorteilhaft insbesondere vorgesehen sein, dass beide flexiblen Hüllenteile kreiszylinderförmige Faltenbalge sind, wobei einer der Faltenbalge stets einen größeren Innendurchmesser aufweist, als der andere. Insbesondere können die Faltenbalge derart gewählt sein, dass deren Innendurchmesser, im vollständig zusammengeschobenen Zustand gemessen, unterschiedlich sind.

Insbesondere bei einer solchen Ausführung kann das rigide Hüllenteil einer Kammer als Deckel oder als Boden für den das flexible Hüllenteil bildenden Faltenbalg ausgebildet sein, wobei das rigide Hüllenteil den Faltenbalg nach außen hermetisch und für das Medium undurchlässig abschließt.

Die flexiblen Hüllenteile können vorteilhaft beispielsweise aus Gummi oder aus einem Metall oder eine Metalllegierung hergestellt sein.

Vorzugsweise sind die flexiblen Hüllenteile derart ausgebildet, dass sie bei einem Druckunterschied im Inneren relativ zur Außenumgebung ihre Form, jedoch nicht die Größe ihrer Fläche, insbesondere ihrer Innenfläche, verändern. Alternativ oder zusätzlich kann vorteilhaft vorgesehen sein, dass die flexiblen Hüllenteile gegen radiale Kräfte, also gegen Kräfte senkrecht zum Verschiebeweg der Ankoppelelemente, ausgesteift sind und/oder dass das Innenvolumen der flexiblen Hüllenteile, insbesondere im Wesentlichen, nur in Axialrichtung veränderbar ist. Auf diese Weise ist vorteilhaft vermieden, dass die Stellvorrichtung auf die durch die Pumpvorrichtung erzeugten Druckunterschiede ganz oder teilweise mit einem, beispielsweise radialen, Ausweichen der flexiblen Hüllenteile der Kammern reagiert. Ein Aussteifen kann beispielsweise dadurch realisiert sein, dass die Wandung der Faltenbalge aus einem dehnfesten Material in ausreichender Dicke hergestellt ist und/oder dass in die einzelnen Falten Verstärkungsringe eingearbeitet sind.

Vorzugsweise sind die Hüllen der Kammern, abgesehen von der das Medium fördernden Pumpvorrichtung, für das strömungsfähige Medium undurchlässig ausgebildet. Insbesondere ist jeweils das rigide Hüllenteil für das strömungsfähige Medium undurchlässig mit dem flexiblen Hüllenteil verbunden.

Es können allerdings verschließbare Öffnungen vorhanden sein, beispielsweise um die Kammern mit dem Medium befüllen zu können oder um im Wartungsfall das Medium ablassen zu können. Bei einer besonders kostengünstig herstellbaren und robusten Ausführung wird die Stellvorrichtung jedoch bereits bei der Herstellung befüllt und hermetisch derart verschlossen, dass sie nicht mehr zerstörungsfrei geöffnet werden kann.

Bei einer vorteilhaften Ausführung sind Ankoppelelemente, die insbesondere durch die rigiden Hüllenteile gebildet sein können, an entgegengesetzten Enden der über das Zwischenelement miteinander verbundenen Kammern angeordnet. Alternativ kann auch vorgesehen sein, dass die Ankoppelelemente, die insbesondere durch die rigiden Hüllenteile gebildet sein können, einander entgegengesetzt angeordnete Enden der Stellvorrichtung bilden.

Bei dem Medium kann es sich insbesondere um ein Gas, eine Flüssigkeit, insbesondere ein Hydrauliköl, handeln. Das Medium kann auch ein Nanofluid sein. Es ist auch möglich, dass das Medium aus Kugeln besteht, die im Verhältnis zu den Abmessungen der Kammern und der Pumpvorrichtung so hinreichend klein sind, dass ein Pumpen von Kugeln von einer Kammer zur anderen möglich ist. Vorzugsweise ist das Medium inkompressibel.

Die Pumpvorrichtung ist vorzugsweise derart ausgebildet, dass sie das Medium sowohl von der ersten Kammer in die zweite Kammer, also auch von der zweiten Kammer in die erste Kammer pumpen kann. Durch ein Einstellen der Pumprichtung kann festgelegt werden, ob sich die Ankoppelelemente einander annähern oder ob sich die Ankoppelelemente voneinander entfernen.

Bei einer anderen Ausführung ist die Pumpvorrichtung dazu ausgebildet, ausschließlich in einer Richtung zu Pumpen. Bei einer solchen Ausführung ist vorzugsweise eine Federvorrichtung vorhanden, die die Ankoppelelemente und das Zwischenelement relativ zueinander in eine Ausgangsstellung drängt. Bei Betätigung der Pumpvorrichtung wird bei einer solchen Ausführung nicht nur eine Auslenkung der Ankoppelelemente aus der Ausgangsstellung bewirkt, sondern zusätzlich und gleichzeitig die Federvorrichtung gespannt. Um die Ankoppelelemente wieder in die Ausgangsstellung zurück bewegen zu können, weist diese Ausführung ein steuerbares Ventil auf, das geöffnet werden kann, um ein Rückströmen des Mediums entgegen der Pumprichtung der (dann vorzugsweise abgeschalteten) Pumpvorrichtung und damit eine Bewegung der Ankoppelelemente in Richtung auf die Ausgangsstellung zurück erlaubt. Insbesondere können elektrische Kabel vorhanden sein, über die das Ventil gesteuert wird. Bei einer besonderen Ausführung wird das Ventil kabellos gesteuert. Insbesondere bei einer solchen Ausführung kann die Stellvorrichtung einen Energiespeicher, insbesondere einen Akku, beinhalten, der das Ventil und/oder eine elektronische Ventialansteuerung mit elektrischer Energie versorgt.

Bei einer ganz besonders vorteilhaften Ausführung ist die Federvorrichtung wenigstens teilweise, insbesondere vollständig, durch die flexiblen Hüllenteile gebildet. Insbesondere kann beispielsweise ein Faltenbalg, der als flexibles Hüllenteil fungiert, zusätzlich eine Federfunktion aufweisen. Hierzu kann der Faltenbalg beispielsweise aus Stahl, insbesondere Federstahl, oder aus Gummi hergestellt sein und insbesondere hinsichtlich der Wandstärke entsprechend dimensioniert sein.

Es ist allerdings, alternativ oder zusätzlich, auch möglich, dass die Federvorrichtung lediglich teilweise durch die flexiblen Hüllenteile gebildet ist und dass die Stellvorrichtung außer den flexiblen Hüllenteilen weitere Federelemente aufweist. Die weiteren Federelemente können vorteilhaft zu den flexiblen Hüllenteilen mechanisch parallel geschaltet sein.

Bei einer anderen Ausführung weisen die flexiblen Hüllenteile keine oder nur eine sehr geringe Federwirkung auf. Bei einer solchen Ausführung kann die Stellvorrichtung separate Federelemente aufweisen, die insbesondere zu den flexiblen Hüllenteilen mechanisch parallel geschaltet sein können.

Bei einer besonders kompakt und robust ausbildbaren Ausführung sind die Ankoppelelemente ausschließlich mittels der flexiblen Hüllenteile mit dem Zwischenelement verbunden. Alternativ oder zusätzlich kann auch vorgesehen sein, dass außer den flexiblen Hüllenteilen und/oder der Federvorrichtung kein Führungselement zum Führen der Ankoppelelemente und des Zwischenelements relativ zueinander vorhanden ist.

Allerdings sollte gewährleistet sein, dass die Kammern auch dann, wenn sie zu einer großen axialen Länge ausgefahren sind, genügend Stabilität aufweisen und die wirkenden Kräfte kein seitliches Einknicken verursachen können. Insbesondere bei einer Ausführung, die Faltenbalge unterschiedlichen Innendurchmessers aufweist, sollte die maximal mögliche Länge und der Durchmesser jedes Faltenbalgs so gewählt sein, dass ein Einknicken bei den zu erwartenden Kräften sicher ausgeschlossen werden kann. Dies gilt insbesondere für den Faltenbalg mit dem kleineren Durchmesser.

Bei einer besonderen Ausführung weist die Stellvorrichtung einen umlaufenden Kragen auf, der dazu dient, eines der flexiblen Hüllenteile radial, insbesondere für den Fall des Einknickens, zu stützen. Der Kragen weist vorzugsweise eine Höhe auf, die nicht größer ist, als die Höhe des zu stützenden flexiblen Hüllenteils im vollständig komprimierten Zustand, so dass sich an der ausnutzbaren Gesamthöhe der Stellvorrichtung nichts ändert. Der Kragen kann an einem der Krafteinleitungselemente oder an dem Zwischenelement befestigt sein.

Es ist auch möglich, dass mehrere Kragen vorhanden sind. Insbesondere können mehrere Kragen zum Abstützen desselben flexiblen Hüllenteils vorhanden sein, wobei einer der Kragen an einem Krafteinleitungselement angeordnet ist, während der Kragen andere an dem Zwischenelement angeordnet ist. Insbesondere können die beiden Kragen (beispielsweise durch unterschiedliche Durchmesser) derart ausgebildet sein, das sie teleskopartig ineinander greifen und sich so nicht gegenseitig behindern.

Um die Gefahr eines Einknickens des flexiblen Hüllenteils einer der Kammern zu verringern, sind bei einer besonderen Ausführung statt zwei Kammern drei oder mehr Kammern in Reihe geschaltet, was die Verwendung von Kammern einer geringeren maximalen Länge zulässt.

Ganz allgemein kann insoweit vorgesehen sein, dass eine der Kammern anstelle eines Ankoppelelemente ein weiteres Zwischenelement hat, an dem eine dritte, insbesondere vollständig, mit dem Medium gefüllte Kammer angeordnet ist und das eine weitere Pumpvorrichtung für das Medium aufweist, wobei die dritte Kammer ein drittes flexibles Hüllenteil und das Ankoppelelement (anstelle der Kammer, die anstelle des Ankoppelelements nun das weitere Zwischenelement hat) aufweist. Insbesondere kann das Ankoppelelement der dritten Kammer durch ein drittes rigides Hüllenteil gebildet sein.

Außerdem ist hierbei vorgesehen, dass ein Annähern des Ankoppelelements der dritten Kammer zu dem weiteren Zwischenelement eine Änderung des Innenvolumens der dritten Kammer bewirkt und dass das Verhältnis von Längenänderung zu Innenvolumenänderung bei der dritten Kammer unterschiedlich ist zu dem Verhältnis von Längenänderung zu Innenvolumenänderung der zweiten Kammer, zu der das Zwischenelement und das weitere Zwischenelement gehört, und/oder gleich dem Verhältnis von Längenänderung zu Innenvolumenänderung der ersten Kammer.

Dies kann insbesondere vorteilhaft in der Weise realisiert sein, dass die Ankoppelelemente, die insbesondere die entgegengesetzt angeordnete Enden der Stellvorrichtung bilden können, sich voneinander entfernen, weil das Medium aus einer zweiten (mittleren) Kammer mittels der Pumpvorrichtung und der weiteren Pumpvorrichtung heraus in die erste Kammer und die dritte Kammer gepumpt wird, so dass die zweite (mittlere) Kammer fortlaufend an Länge verliert, während die erste Kammer und die dritte Kammer, in die das Medium einströmt, gleichzeitig, allerdings in einem größerem Maße, an Länge gewinnen. Bei umgekehrten Pumprichtungen verlieren die erste und die dritte Kammer schneller an Länge, als die zweite Kammer an Länge zunimmt, wodurch insgesamt eine Annäherung der Ankoppelelemente erreicht wird. Eine solche Ausführung kann vorteilhaft insbesondere unter Verwendung dreier Faltenbalge realisiert werden, wobei die äußeren Faltenbalge (erster und dritter Faltenbalg) im Querschnitt senkrecht zur Axialrichtung kleiner sind, als der mittlere (zweite) Faltenbalg. Insbesondere können die äußeren Faltenbalge (erster und dritter Faltenbalg) einen kleineren Durchmesser, insbesondere Innendurchmesser, aufweisen, als der mittlere (zweite) Faltenbalg.

Insbesondere kann, analog wie oben bereits in Bezug auf eine Ausführung mit zwei Kammern beschreiben, vorteilhaft vorgesehen sein, dass das Ankoppelelement der dritten Kammer und/oder das dritte rigide Hüllenteil eine dem Medium der dritten Kammer zugewandte Innenfläche aufweist, deren Projektion auf eine Ebene senkrecht zur Verschieberichtung der Ankoppelelemente kleiner ist, als die Projektion auf eine Ebene senkrecht zur Verschieberichtung der Ankoppelelemente der dem Medium der zweiten Kammer zugewandte Innenfläche des weiteren Zwischenelements.

Beispielsweise kann statt einer zweikammerigen Stellvorrichtung mit ausschließlich zwei Faltenbalgen, bei dem einer der Faltenbalge im ausgezogenen Zustand besonders lang ist, eine dreikammerige Stellvorrichtung mit drei Faltenbalgen zum Einsatz kommen, wobei der im ausgezogenen Zustand besonders lange Faltenbalg der zweikammerigen Stellvorrichtung durch zwei kürzere Faltenbalge ersetzt ist, die vorzugsweise beidseitig an eine mittlere Kammer, die einen Faltenbalg mit einem größeren Durchmesser aufweist, in der oben beschriebenen Weise u.a. mittels einer Pumpvorrichtung und einer weiteren Pumpvorrichtung angeschlossen sind.

In Bezug auf die dritte Kammer kann, analog wie bei einer zweikammerigen Ausführung eine weitere Federvorrichtung vorhanden sein, die das weitere Ankoppelelement und das weitere Zwischenelement relativ zueinander in eine weitere Ausgangsstellung drängt. Die weitere Federvorrichtung kann wenigstens teilweise, insbesondere vollständig, durch das dritte flexible Hüllenteil gebildet sein. Es ist jedoch auch möglich, dass die weitere Federvorrichtung ein zusätzliches, insbesondere mechanisch zu dem dritten flexiblen Hüllenteil parallel geschaltetes, Federelement aufweist.

Bei einer besonders robusten und kompakten Ausführung ist das weitere Ankoppelelement ausschließlich mittels des dritten flexiblen Hüllenteils mit dem weiteren Zwischenelement verbunden. Alternativ oder zusätzlich kann auch vorgesehen sein, dass außer dem dritten flexiblen Hüllenteil und/oder einer weiteren Federvorrichtung kein Führungselement zum Führen des weiteren Ankoppelelements relativ zu dem weiteren Zwischenelement vorhanden ist.

Analog wie oben bereits in Bezug auf eine zweikammerige Ausführung beschrieben, kann das dritte flexible Hüllenteil vorteilhaft derart ausgebildet sein, dass es bei einer, insbesondere radialen, Belastung seine Form, jedoch nicht die Größe seiner Fläche, insbesondere seiner Innenfläche, verändert. Alternativ oder zusätzlich kann auch vorgesehen sein, dass dritte flexible Hüllenteil gegen radiale Kräfte ausgesteift ist und/oder dass das Innenvolumen des dritten flexiblen Hüllenteils, insbesondere im Wesentlichen, nur in Axialrichtung veränderbar ist.

Die erfindungsgemäße Stellvorrichtung kann vorteilhaft insbesondere in Luftfahrzeugen, insbesondere Flugzeugen, eingesetzt werden. Dies beispielsweise um die Stellung von Landeklappen einzustellen oder um ein Fahrwerk ein- und auszufahren. Hierbei ist besonders vorteilhaft, dassanders als bei den in Flugzeugen üblichen hydraulischen Stellsystemen - keine störungsanfälligen hydraulischen Leitungen erforderlich sind. Vielmehr können die einzelnen Stellvorrichtungen ausschließlich elektrisch angesteuert werden, was die Ausfallsicherheit erheblich erhöht. Anders als bei Systemen, bei denen mehrere hydraulische Stellvorrichtungen an dasselbe Hydrauliksystem angeschlossen sind, hat ein Ausfall einer von mehreren in einem Flugzeug verwendeten erfindungsgemäßen Stellvorrichtungen keine Konsequenzen für die Funktion der übrigen Stellvorrichtungen.

Darüber hinaus kann durch Verwendung der erfindungsgemäßen Stellvorrichtung, insbesondere in einem Fluggerät, vorteilhaft Gewicht eingespart werden.

Es ist insbesondere auch möglich, die erfindungsgemäße Stellvorrichtung in Umgebungen einzusetzen, in denen er dem Einfluss von Schmutz oder Flüssigkeiten ausgesetzt ist. Insbesondere kann der erfindungsgemäße Stellvorrichtung auch in einer flüssigen Umgebung, beispielsweise unter Wasser, eingesetzt werden. Hierbei ist von besonderem Vorteil, dass die erfindungsgemäße Stellvorrichtung vorzugsweise als ein hermetisch abgeschlossenes System ausgebildet ist, das gänzlich ohne Dichtungen zwischen relativ zueinander bewegten Bauteilen, wie beispielsweise Wellendichtringe, auskommt. Daher ist das Eindringen von Schmutz oder schädlichen Substanzen bei der erfindungsgemäßen Stellvorrichtung weitestgehend ausgeschlossen.

Die erfindungsgemäße Stellvorrichtung ist vorzugsweise als Linearversteller ausgebildet. Es ist jedoch nicht ausgeschlossen, dass die Stellvorrichtung eine Führungseinrichtung aufweist, die für die Ankoppelelemente einen gebogen Verschiebeweg vorgibt.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Ausführungsbeispiel einer erfindungsgemäßen Stellvorrichtung, bei einem Stellvorgang, bei dem sich die Ankoppelelemente einander annähern,
- Fig. 2: das Ausführungsbeispiel einer erfindungsgemäßen Stellvorrichtung, bei einem Stellvorgang, bei dem sich die Ankoppelelemente voneinander entfernen, und
- Fig. 3: ein weiteres Ausführungsbeispiel einer erfindungsgemäßen Stellvorrichtung.

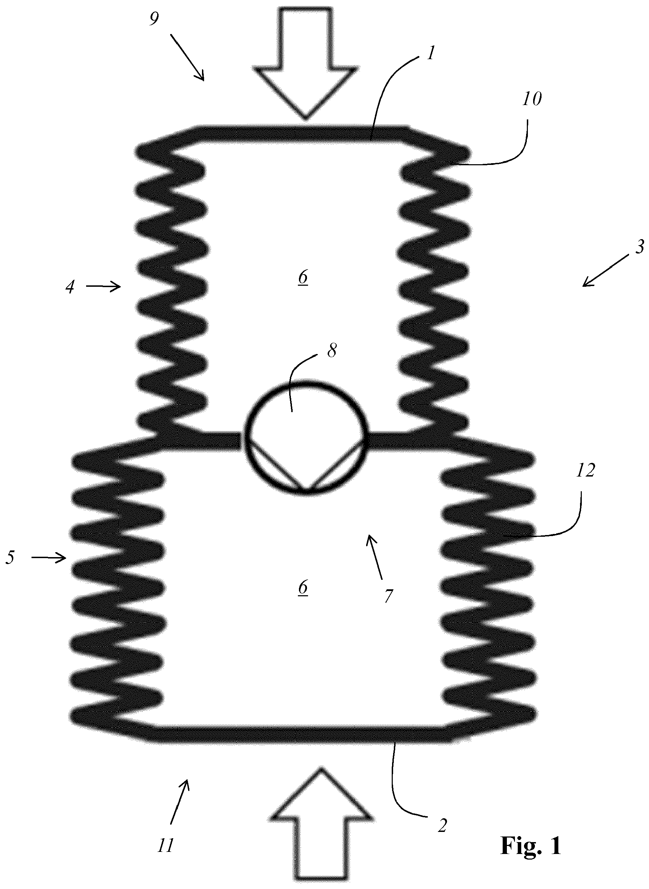

Fig. 1 zeigt ein Ausführungsbeispiel einer erfindungsgemäßen Stellvorrichtung, die zwei Ankoppelelemente 1, 2 aufweist, deren Abstand mittels eines Stellantriebs 3 veränderbar ist. An den Ankoppelelementen 1, 2 können externe Gegenstände befestigt werden, deren Relativposition mit der Stellvorrichtung verändert werden kann.

Der Stellantrieb 3 weist eine erste Kammer 4 und eine zweite Kammer 5 auf, deren Füllvolumen veränderbar ist und die beide, insbesondere ausschließlich, mit einem strömungsfähigen Medium 6 gefüllt sind.

Beide Kammern 4, 5 sind an einem gemeinsamen Zwischenelement 7 angeordnet, das jeweils Teil der Hüllen der Kammern ist und das eine Pumpvorrichtung 8 aufweist, mittels der das Medium 6 von der ersten Kammer 4 in die zweite Kammer 5 und/oder von der zweiten Kammer 5 in die erste Kammer 4 gepumpt werden kann.

Die erste Kammer 4 weist eine erste Hülle mit einem ersten rigiden Hüllenteil 9 und einem ersten flexiblen Hüllenteil 10 auf. Das erste rigide Hüllenteil 9 ist durch das erste Ankoppelelement 1 gebildet. Das erste flexible Hüllenteil 9 ist durch einen ersten Faltenbalg gebildet, wobei das erste rigide Hüllenteil 9 das zweite flexible Hüllenteil 10 wie ein Deckel nach außen für das Medium 6 undurchlässig abschließt.

Die zweite Kammer 5 weist eine zweite Hülle mit einem zweiten rigiden Hüllenteil 11 und einem zweiten flexiblen Hüllenteil 12 auf. Das zweite rigide Hüllenteil 11 ist durch das zweite Ankoppelelement 2 gebildet. Das zweite flexible Hüllenteil 12 ist durch einen zweiten Faltenbalg gebildet, der einen größeren Innendurchmesser aufweist, als der erste Faltenbalg, der das erste flexible Hüllenteil 10 bildet. Das zweite rigide Hüllenteil 11 schließt das zweite flexible Hüllenteil 12 wie ein Deckel nach außen, in einer für das Medium 6 undurchlässigen Weise, ab.

Die Kammern 4, 5 sind, abgesehen von der Pumpvorrichtung 8, für das Medium 6 undurchlässig ausgebildet. Die gesamte Stellvorrichtung ist nach außen hin hermetisch abgeschlossen.

Die Kammern 4, 5 sind derart ausgebildet, dass jeweils ein Annähern des Ankoppelelements 1, 2 zu dem Zwischenelement 7 und die damit einher gehende axiale Längenänderung der jeweiligen Kammer 4, 5 durch eine Änderung des Innenvolumens der jeweiligen Kammer 4, 5 bewirkbar ist, wobei das Verhältnis von Längenänderung zu Innenvolumenänderung bei den beiden Kammern 4, 5, unterschiedlich ist.

Wenn die bidirektional betreibbare Pumpvorrichtung in der Weise aktiv ist, dass das Medium von der ersten Kammer 4 in die zweite Kammer 5 gepumpt wird, nähert sich das erste Ankoppelelement 1 an das Zwischenelement 7 an, während sich gleichzeitig das zweite Ankoppelelement 2 von dem Zwischenelement 7 entfernt. Da die als Faltenbalge ausgebildeten flexiblen Hüllenteile 10, 12 unterschiedliche Innendurchmesser aufweisen und das Volumen des aus der ersten Kammer 4 ausströmenden und in die zweite Kammer 5 einströmenden Anteils des Medium 6 stets gleich ist, verkürzt sich der erste Faltenbalg schneller, als der zweite Faltenbalg an axialer Länge gewinnt, mit dem Ergebnis, dass sich die Stellvorrichtung insgesamt verkürzt und sich die Ankoppelelemente 1, 2 einander annähern.

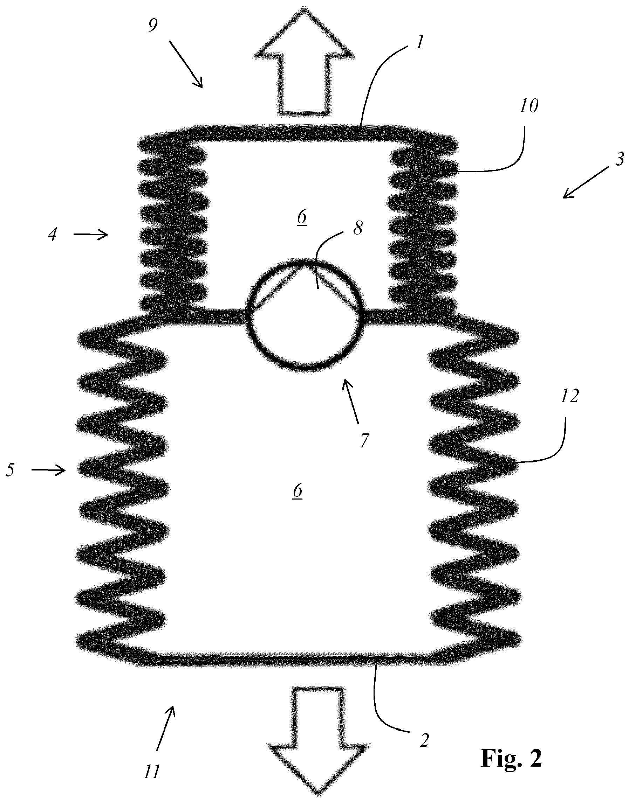

Hingegen erfährt der erste Faltenbalg der ersten Kammer 4 bei entgegengesetzter Pumprichtung kontinuierlich eine größere axiale Längung, als der zweite Faltenbalg der zweiten Kammer 5, mit dem Ergebnis, dass sich die Stellvorrichtung insgesamt längt und sich die Ankoppelelemente 1, 2 einander annähern, was in Figur 2 dargestellt ist.

Wenn die erste Kammer 4 eine Querschnittsfläche q1 senkrecht zur Axialrichtung und die zweite Kammer 5 ein Querschnittsfläche q2 aufweist, das gesamte in der Stellvorrichtung befindliche Medium 6 das Volumen V hat und die axiale Länge der ersten Kammer 4 h1 ist, während die Länge der zweiten Kammer 5 h2 ist, so gilt: V = h1 x q1 + h2 x q2. Wird beispielsweise ein Teil des Mediums 6 mit dem Volumen ΔV von der ersten Kammer 4 in die zweite Kammer 5 gepumpt, so erfährt die erste Kammer 4 eine Verkürzung um ΔV/q1, während die zweite Kammer 5 eine axiale Längung um ΔV/q2 erfährt. Da q1 kleiner als q2 ist, nimmt die axiale Gesamtlänge der Stellvorrichtung hierbei um (ΔV/q1)- (ΔV/q2) ab.

Würde beispielsweise gelten V = 700 cm², q1 = 100 cm², q2 = 25 cm², dann würde der Abstand der Ankoppelelemente minimal 7 cm und maximal 28 cm betragen. Der Gesamthub der Stellvorrichtung würde also 21 cm betragen. In der Praxis ist der Gesamthub jedoch etwas geringer als berechnet, weil Faltenbalge im vollständig komprimierten Zustand noch einige cm Höhe aufweisen, was in der obigen Rechnung nicht berücksichtigt ist.

Der Vollständigkeit halber sei klargestellt, dass die obige Rechnung so nicht angewendet werden kann, wenn die Kammern nicht zylinderförmig ausgebildet sind, weil dann die Querschnittsfläche der jeweiligen Kammer über die Höhe nicht konstant ist. Streng genommen sind auch Faltenbalge nicht zylinderförmig, so dass die obige Rechnung lediglich eine Näherung darstellt. Im Allgemeinen ist vielmehr jeweils konkret dV/dq (Ableitung des Volumens nach der Höhe) für jede Kammer zu berücksichtigen.

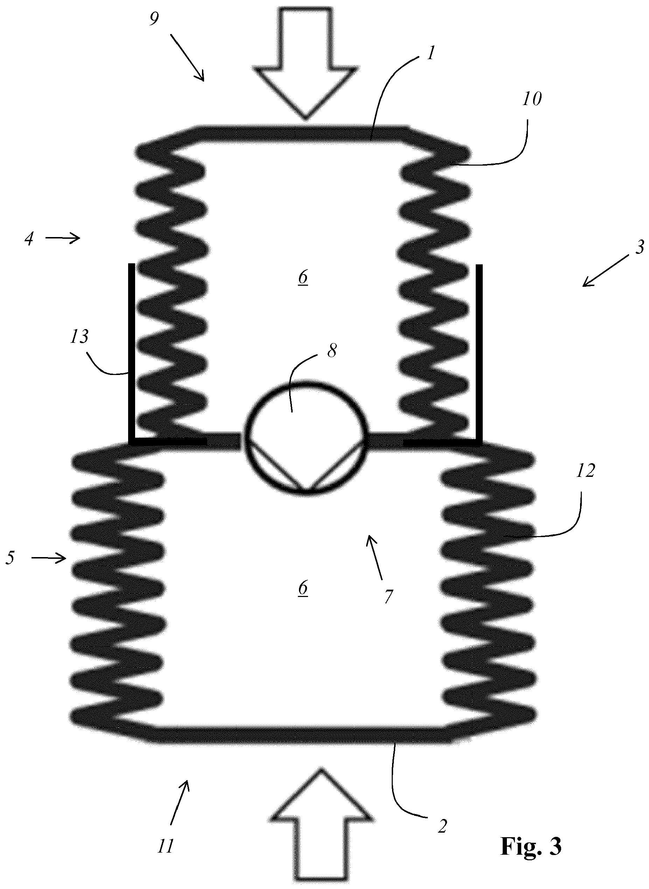

Fig. 3 zeigt ein weiteres Ausführungsbeispiel einer erfindungsgemäßen Stellvorrichtung, das im Wesentlichen dem in Figur 1 dargestellten Ausführungsbeispiel entspricht. Die Stellvorrichtung weist jedoch zusätzlich einen umlaufenden Kragen 13 auf, der dazu dient, das erste flexible Hüllenteil 10 radial zu stützen, falls es einknicken sollte. Der Kragen 13 weist vorzugsweise eine Höhe auf, die nicht größer ist, als die Höhe des ersten flexiblen Hüllenteils 10 im vollständig komprimierten Zustand. Der Kragen 13 ist an dem Zwischenelement 7 befestigt. Vorzugsweise ist der Kragen 13 von dem ersten flexiblen Hüllenteil 10 radial beabstandet und berührt das erste flexible Hüllenteil 10 lediglich dann, wenn dieses anfängt einzuknicken.

### Bezugszeichenliste:

- 1: erstes Ankoppelelement
- 2: zweites Ankoppelelement
- 3: Stellantrieb
- 4: erste Kammer
- 5: zweite Kammer
- 6: strömungsfähiges Medium
- 7: Zwischenelement
- 8: Pumpvorrichtung
- 9: erstes rigides Hüllenteil
- 10: erstes flexibles Hüllenteil
- 11: zweites rigides Hüllenteil
- 12: zweites flexibles Hüllenteil
- 13: Kragen

## Patentansprüche

1. Stellvorrichtung mit zwei Ankoppelelementen (1, 2), deren Abstand mittels eines Stellantriebs veränderbar ist, **dadurch gekennzeichnet, dass** der Stellantrieb eine erste und eine zweite Kammer (4, 5) aufweist, deren Füllvolumen veränderbar ist und die beide, insbesondere ausschließlich, mit einem strömungsfähigen Medium (6) gefüllt sind und die beide an einem gemeinsamen Zwischenelement (7) angeordnet sind, das eine Pumpvorrichtung (8) aufweist, mittels der das Medium (6) von der ersten Kammer (4) in die zweite Kammer (5) und/oder von der zweiten Kammer (4) in die erste Kammer (5) gepumpt werden kann, wobei jede der Kammern (4, 5) ein flexibles Hüllenteil (10, 12) und eines der Ankoppelelemente (1, 2) aufweist und wobei jeweils ein Annähern des Ankoppelelements zu dem Zwischenelement (7) und die damit einher gehende Längenänderung der jeweiligen Kammer (7, 8) durch eine Änderung des Innenvolumens der jeweiligen Kammer (7, 8) bewirkbar ist, wobei das Verhältnis von Längenänderung zu Innenvolumenänderung bei den beiden Kammern (4, 5) unterschiedlich ist.

2. Stellvorrichtung nach Anspruch 1, **dadurch gekennzeichnet, dass**
a. die erste Kammer (4) ein erstes rigides Hüllenteil (9) aufweist, das ein erstes der Ankoppelelemente (1, 2) ist, und/oder dass
b. die zweite Kammer (5) ein zweites rigides Hüllenteil (11) aufweist, das ein zweites der Ankoppelelemente (1, 2) ist, und/oder dass
c. die erste Kammer (4) ein erstes rigides Hüllenteil (9) aufweist, das ein erstes der Ankoppelelemente (1, 2) ist, wobei das rigide Hüllenteil (9, 11) als Deckel oder als Boden für den Faltenbalg ausgebildet ist, und/oder dass
d. die zweite Kammer (5) ein zweites rigides Hüllenteil (11) aufweist, das ein zweites der Ankoppelelemente (1, 2) ist, wobei das rigide Hüllenteil (9, 11) als Deckel oder als Boden für den Faltenbalg ausgebildet ist.

3. Stellvorrichtung nach Anspruch 1 oder 2, **dadurch gekennzeichnet, dass** die Projektionen der dem Medium (6) zugewandten Innenflächen der Ankoppelelemente (1, 2) in Verschieberichtung der Ankoppelelemente (1, 2) unterschiedlich groß sind.

4. Stellvorrichtung nach einem der Ansprüche 1 bis 3, **dadurch gekennzeichnet, dass**
a. wenigstens eines der flexiblen Hüllenteile (10, 12) als Faltenbalg mit wenigstens einer Falte, insbesondere Ringfalte, ausgebildet ist oder dass wenigstens eines der flexiblen Hüllenteile (10, 12) als zylinderförmiger, insbesondere kreiszylinderförmiger, Faltenbalg mit wenigstens einer Falte, insbesondere Ringfalte, ausgebildet ist, und/oder dass
b. beide flexiblen Hüllenteile (10, 12) jeweils als Faltenbalge ausgebildet sind, oder dass beide flexiblen Hüllenteile (10, 12) jeweils als Faltenbalge ausgebildet sind, die koaxial zueinander angeordnet sind, und/oder dass
c. beide flexiblen Hüllenteile (10, 12) jeweils als kreiszylinderförmige Faltenbalge ausgebildet sind und dass einer der Faltenbalge einen größeren Innendurchmesser aufweist, als der andere.

5. Stellvorrichtung nach einem der Ansprüche 1 bis 4, **dadurch gekennzeichnet, dass**
a. die flexiblen Hüllenteile (10, 12) bei einem Druckunterschied im Inneren relativ zur Außenumgebung ihre Form, jedoch nicht die Größe ihrer Fläche, insbesondere ihrer Innenfläche, verändern, und/oder dass
b. die flexiblen Hüllenteile (10, 12) gegen radiale Kräfte ausgesteift sind, und/oder dass
c. das Innenvolumen der flexiblen Hüllenteile (10, 12), insbesondere im Wesentlichen, nur in Axialrichtung veränderbar ist.

6. Stellvorrichtung nach einem der Ansprüche 1 bis 5, **dadurch gekennzeichnet, dass**
a. die Hüllen der Kammern (4, 5), abgesehen von der das Medium (6) fördernden Pumpvorrichtung (8), für das strömungsfähige Medium (6) undurchlässig ausgebildet sind, und/oder dass
b. jeweils das Ankoppelelement (1, 2) und/oder das rigide Hüllenteil (9, 11) für das strömungsfähige Medium (6) undurchlässig mit dem flexiblen Hüllenteil (10, 12) verbunden ist, und/oder dass
c. die Ankoppelelemente (1, 2) und/oder die rigiden Hüllenteile (9, 11) an entgegengesetzten Enden der über das Zwischenelement (7) miteinander verbundenen Kammern (4, 5) angeordnet sind oder dass die Ankoppelelemente (1, 2) und/oder die rigiden Hüllenteile (9, 11) einander entgegengesetzt angeordnete Enden der Stellvorrichtung bilden.

7. Stellvorrichtung nach einem der Ansprüche 1 bis 6, **dadurch gekennzeichnet, dass**
a. das Medium (6) ein Gas, eine Flüssigkeit oder ein Nanofluid ist oder aus Kugeln besteht und/oder dass das Medium (6) inkompressibel ist, und/oder dass
b. das Zwischenelement (7) ein Ventil aufweist.

8. Stellvorrichtung nach einem der Ansprüche 1 bis 7, **dadurch gekennzeichnet, dass**
a. eine Federvorrichtung vorhanden ist, die die Ankoppelelemente (1, 2) relativ zueinander und/oder die Ankoppelelemente (1, 2) relativ zu dem Zwischenelement (7) in eine Ausgangsstellung drängt, oder dass
b. eine Federvorrichtung vorhanden ist, die die Ankoppelelemente (1, 2) relativ zueinander und/oder die Ankoppelelemente (1, 2) relativ zu dem Zwischenelement (7) in eine Ausgangsstellung drängt, wobei die Federvorrichtung wenigstens teilweise, insbesondere vollständig, durch die flexiblen Hüllenteile (10, 12) gebildet ist.

9. Stellvorrichtung nach einem der Ansprüche 1 bis 8, **dadurch gekennzeichnet, dass**
a. die Ankoppelelemente ausschließlich mittels der flexiblen Hüllenteile (10, 12) mit dem Zwischenelement (7) verbunden sind, und/oder dass
b. außer den flexiblen Hüllenteilen (10, 12) und/oder der Federvorrichtung kein Führungselement zum Führen der Ankoppelelemente (1, 2) und des Zwischenelements (10) relativ zueinander vorhanden ist.

10. Stellvorrichtung nach einem der Ansprüche 1 bis 9, **dadurch gekennzeichnet, dass** eine der Kammern (4, 5) anstelle eines Ankoppelelemente (1, 2) ein weiteres Zwischenelement aufweist, an dem eine dritte, insbesondere vollständig, mit dem Medium (6) gefüllte Kammer angeordnet ist und das eine weitere Pumpvorrichtung für das Medium (6) aufweist, wobei die dritte Kammer ein drittes flexibles Hüllenteil und das Ankoppelelement (1, 2) aufweist und wobei ein Annähern des Ankoppelelements (1, 2) der dritten Kammer zu dem weiteren Zwischenelement eine Änderung des Innenvolumens der dritten Kammer bewirkt und dass das Verhältnis von Längenänderung zu Innenvolumenänderung bei der dritten Kammer unterschiedlich ist zu dem Verhältnis von Längenänderung zu Innenvolumenänderung der zweiten Kammer, zu der das Zwischenelement und das weitere Zwischenelement gehört, und/oder gleich dem Verhältnis von Längenänderung zu Innenvolumenänderung der ersten Kammer.

11. Stellvorrichtung nach Anspruch 10, **dadurch gekennzeichnet, dass**
a. die dritte Kammer ein drittes rigides Hüllenteil aufweist, das eines der beiden Ankoppelelemente (1,2) bildet, und/oder dass
b. dass das Ankoppelelement (1, 2) der dritten Kammer und/oder das dritte rigide Hüllenteil eine dem Medium (6) der dritten Kammer zugewandte Innenfläche aufweist, deren Projektion auf eine Ebene senkrecht zur Verschieberichtung der Ankoppelelemente (1, 2) kleiner ist, als die Projektion auf eine Ebene senkrecht zur Verschieberichtung der Ankoppelelemente (1, 2) der dem Medium (6) der zweiten Kammer (5) zugewandten Innenfläche des weiteren Zwischenelements, und/oder dass
c. das dritte flexible Hüllenteil als Faltenbalg mit wenigstens einer Falte, insbesondere Ringfalte, ausgebildet ist oder dass das dritte flexible Hüllenteil als zylinderförmiger, insbesondere kreiszylinderförmiger, Faltenbalg mit wenigstens einer Falte, insbesondere Ringfalte, ausgebildet ist.

12. Stellvorrichtung nach Anspruch 10 oder 11, **dadurch gekennzeichnet, dass**
a. eine weitere Federvorrichtung vorhanden ist, die das Ankoppelelement und das weitere Zwischenelement relativ zueinander in eine weitere Ausgangsstellung drängt, oder dass
b. eine weitere Federvorrichtung vorhanden ist, die das Ankoppelelement und das weitere Zwischenelement relativ zueinander in eine weitere Ausgangsstellung drängt und die wenigstens teilweise, insbesondere vollständig, durch das dritte flexible Hüllenteil gebildet ist.

13. Stellvorrichtung nach einem der Ansprüche 10 bis 12, **dadurch gekennzeichnet, dass**
a. das weitere Zwischenelement ein Ventil aufweist, und/oder dass
b. das Ankoppelelement (2) der dritten Kammer ausschließlich mittels des dritten flexiblen Hüllenteils mit dem weiteren Zwischenelement verbunden ist, und/oder dass
c. außer dem dritten flexiblen Hüllenteil und/oder einer weiteren Federvorrichtung kein Führungselement zum Führen des Ankoppelelements (2) der dritten Kammer relativ zu dem weiteren Zwischenelement vorhanden ist, und/oder dass
d. das dritte flexible Hüllenteil bei einem Druckunterschied im Inneren der Kammer relativ zur Außenumgebung seine Form, jedoch nicht die Größe seiner Fläche, insbesondere seiner Innenfläche, verändert, und/oder dass
e. das dritte flexible Hüllenteil gegen radiale Kräfte ausgesteift ist, und/oder dass
f. das Innenvolumen des dritten flexiblen Hüllenteils (25), insbesondere im Wesentlichen, nur in Axialrichtung veränderbar ist.

14. Stellvorrichtung nach einem der Ansprüche 1 bis 13, **dadurch gekennzeichnet, dass** die Stellvorrichtung als Linearversteller ausgebildet ist.

15. Fluggerät, insbesondere Flugzeug, mit wenigstens einer Stellvorrichtung nach einem der Ansprüche 1 bis 14.
